# EUROPÄISCHE PATENTANMELDUNG

(11) **EP 4 442 110 A1**
(43) Veröffentlichungstag der Anmeldung: **09.10.2024**
(21) Anmeldenummer: 24162918.7
(22) Anmeldetag: 12.03.2024
(51) Int. Cl.: A01F 15/07, A01F 15/08, A01F 15/18

(54) **RUNDBALLENPRESSE**

(30) Priorität: 06.04.2023 DE 102023108947
(71) Anmelder: Maschinenfabrik Bernard Krone GmbH & Co. KG, 48480 Spelle (DE)
(72) Erfinder: Schnieders, Felix, 49809 Lingen (DE); Wübbel, Dennis, 49584 Fürstenau (DE)

(57) **Zusammenfassung**

Die vorliegende Erfindung betrifft eine Rundballenpresse (1) mit einem Rahmen (2) sowie einer Pressvorrichtung (10), durch welche eine Presskammer (30) zur Formung eines Erntegutballens (40) wenigstens teilweise definierbar ist, und die ein gegenüber dem Rahmen (2) umlaufend antreibbares, endloses Presselement (12) aufweist, welches über eine Mehrzahl von gegenüber dem Rahmen (2) drehbaren Rolleneinheiten (13, 16) geführt ist. Um bei einer Rundballenpresse einen möglichst kostengünstigen Aufbau vorzuschlagen, der einen möglichen ungleichmäßigen Ballenaufbau berücksichtigt, ist erfindungsgemäß vorgesehen, dass wenigstens eine Rolleneinheit (16) an einer Achseinheit (15) angeordnet und um eine Rollenachse (A) drehbar ist, wobei die Achseinheit (15) über ein Achseinheit-Schwenklager (19) mit einem rahmenseitigen Lagerabschnitt (5) verbunden ist, so dass sie zusammen mit der Rolleneinheit (16) um eine im Winkel zur Rollenachse (A) verlaufende Achseinheit-Schwenkachse (B) schwenkbar ist, wobei sich die Rolleneinheit (16) bezüglich der Rollenachse (A) beiderseits des Achseinheit-Schwenklagers (19) erstreckt.

## Beschreibung

Die vorliegende Erfindung betrifft eine Rundballenpresse nach dem Oberbegriff von Anspruch 1 sowie ein Verfahren nach dem Oberbegriff von Anspruch 15.

Rundballenpressen werden in der Landwirtschaft eingesetzt, um Erntegut wie zum Beispiel Heu oder Stroh vom Boden aufzunehmen und zu runden Erntegutballen zu verpressen, die anschließend mit einem Bindematerial umwickelt werden können. Als Bindematerial können Schnüre, Netze oder (zum Beispiel im Falle von Gras) Folien verwendet werden, wobei letztere auch außerhalb der Rundballenpresse in einem hiervon separaten Ballenwickelgerät appliziert werden können. Das Erntegut wird zunächst (normalerweise durch eine Pick-up) vom Boden aufgenommen und weiter an einen Förderrotor oder Schneidrotor übergeben, der das Erntegut über einen Zuführkanal zur Ballenbildungskammer beziehungsweise Presskammer fördert, in welcher das eigentliche Verpressen erfolgt. Dort wirken Presselemente auf das Erntegut ein, die auch als Förderelemente wirken und eine umlaufende Bewegung des Ernteguts erzeugen. Bei Rundballenpressen mit variabler Kammer wird die effektive Größe der Kammer an die zunehmende Menge von Erntegut angepasst, wobei wenigstens ein endlos umlaufendes Presselement einen überwiegenden Teil der Presskammer definiert. Das Presselement kann zum Beispiel als Stabkettenförderer mit umlaufenden Ketten und dazwischen verlaufenden Stäben ausgebildet sein oder einen beziehungsweise normalerweise mehrere Pressgurte oder -riemen aufweisen. Es ist über eine Mehrzahl von Führungsrollen geführt, wobei typischerweise wenigstens eine dieser Rollen auf einer beweglichen Spannschwinge angeordnet ist. Die Spannschwinge wird entweder über Federelemente oder Aktoren mit einer Kraft beaufschlagt, durch die die Spannung im Presselement und somit auch der Pressdruck auf den Erntegutballen beeinflusst werden.

Im Idealfall wird das Erntegut wenigstens annähernd gleichmäßig oder symmetrisch bezüglich der Querachse der Rundballenpresse aufgenommen, so dass sich in der Presskammer ein wenigstens annähernd zylindrischer Erntegutballen formen lässt. Wenn jedoch, zum Beispiel aufgrund einer falschen Ausrichtung der Rundballenpresse zu einem aufzunehmenden Schwad, das Erntegut deutlich asymmetrisch aufgenommen wird, führt dies dazu, dass der Erntegutballen ebenfalls asymmetrisch, zum Beispiel kegelstumpfartig aufgebaut wird. Somit wird ein einseitig stärkerer Druck auf das Presselement ausgeübt, welches umgekehrt einen einseitig stärkeren Druck auf den Erntegutballen ausübt. Das Presselement ist insgesamt gesehen zwar flexibel, wodurch sein Verlauf der Anordnung der Führungsrollen entsprechend anpassbar ist, aber es ist normalerweise kaum dehnbar. Daher wird die einseitige Belastung an die Führungsrollen weitergegeben. Außerdem neigt das Presselement dazu, dem Druck auszuweichen und bezüglich der Querachse seitlich zu wandern. All dies sind unerwünschte Effekte, insbesondere ist allerdings die asymmetrische Form des Ballens beispielsweise beim Stapeln und Lagern nachteilig. Es ist im Stand der Technik bereits vorgeschlagen worden, die Form des Ballens direkt oder indirekt sensorisch zu überwachen und hieraus ein Signal abzuleiten, anhand dessen die Fahrspur der Rundballenpresse so korrigiert werden kann, dass eine symmetrische Erntegutaufnahme resultiert. Einige vorgeschlagene Systeme basieren auf einer berührungslosen Entfernungsmessung oder auf einer Kraftmessung, was vergleichsweise hohe Kosten mit sich bringt.

Aufgabe der Erfindung ist es, bei einer Rundballenpresse einen möglichst kostengünstigen Aufbau vorzuschlagen, der einen möglichen ungleichmäßigen Ballenaufbau berücksichtigt. Insbesondere im Hinblick auf das erfindungsgemäße Verfahren besteht eine weitere Aufgabe darin, einen ungleichmäßigen Ballenaufbau zu vermindern und bevorzugt zu vermeiden.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen mit einem Rahmen sowie einer Pressvorrichtung, durch welche eine Presskammer zur Formung eines Erntegutballens wenigstens teilweise definierbar ist, und die ein gegenüber dem Rahmen umlaufend antreibbares, endloses Presselement aufweist, welches über eine Mehrzahl von gegenüber dem Rahmen drehbaren Rolleneinheiten geführt ist.

Die Rundballenpresse ist zum Pressen von landwirtschaftlichem Erntegut zu (Rund-) Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln, aber zum Beispiel auch um Häckselmais. Die Rundballenpresse weist einen Rahmen auf, der ihre Grundstruktur bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich die Pressvorrichtung, nach außen abschirmt.

Das Erntegut kann mit einer Pick-up aufgenommen werden und mit einer Fördervorrichtung, zum Beispiel einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. Normalerweise weist die Rundballenpresse einen Zuführkanal auf, den der Erntegutstrom durchläuft, bevor er zur Presskammer gelangt.

Die Formung des Erntegutballens und somit auch der eigentliche Pressvorgang erfolgen innerhalb der Presskammer durch die Pressvorrichtung, welche wenigstens teilweise, ggf. auch vollständig, innerhalb eines Rahmens angeordnet sein kann. Die Presskammer, in der die Ballenbildung und das Pressen des Ballens erfolgen, ist wenigstens teilweise durch die Pressvorrichtung begrenzbar oder definierbar. Die Pressvorrichtung weist ein gegenüber dem Rahmen umlaufend antreibbares, endloses Presselement auf. In diesem Zusammenhang kann das Presselement aus einer oder mehreren Komponenten bestehen, wie nachfolgend noch erläutert wird. Insgesamt ist das Presselement endlos, also in sich geschlossen.

Das Presselement ist über eine Mehrzahl von gegenüber dem Rahmen drehbaren Rolleneinheiten geführt. Die Rolleneinheiten sind einerseits dazu vorgesehen, das Presselement zu führen und in vielen Fällen auch umzulenken. Wenigstens eine Rolleneinheit kann motorisch antreibbar sein, um die umlaufende Bewegung des Presselements zu erzeugen. Außerdem ist in der Regel vorgesehen, dass die Rolleneinheiten das Presselement unter Spannung halten, unabhängig von der aktuellen Größe des Erntegutballens. Die Rolleneinheiten sind gegenüber dem Rahmen drehbar, wobei sie direkt oder indirekt am Rahmen gelagert sein können. Die Rundballenpresse kann eine Auswurfklappe aufweisen, die das Gehäuse rückseitig abschließt und die durch Schwenken gegenüber dem Rahmen geöffnet werden kann, um den Erntegutballen nach seiner Fertigstellung auszuwerfen. Die Auswurfklappe wird in diesem Zusammenhang nicht als Teil des Rahmens angesehen, sie ist allerdings während der Formung des Erntegutballens bestimmungsgemäß geschlossen und somit positionsfest gegenüber dem Rahmen. Wenigstens eine Rolleneinheit kann an der Auswurfklappe gelagert sein. Die Rolleneinheiten können auch als Spannrollen oder Führungsrollen bezeichnet werden. Der Begriff "Rolle" ist nicht dahingehend auszulegen, dass die jeweilige Rolleneinheit eine durchgehend zylindrische Mantelfläche aufweisen muss. Je nach Art des Presselements kann auch eine wenigstens abschnittsweise nicht-zylindrische Mantelfläche und somit ein nichtkreisförmiger Querschnitt ausgebildet sein. Die jeweilige Rolleneinheit kann ein- oder mehrteilig ausgebildet sein.

Erfindungsgemäß ist wenigstens eine Rolleneinheit an einer Achseinheit angeordnet und um eine Rollenachse drehbar, wobei die Achseinheit über ein Achseinheit-Schwenklager mit einem rahmenseitigen Lagerabschnitt verbunden ist, so dass sie zusammen mit der Rolleneinheit um eine im Winkel zur Rollenachse verlaufende Achseinheit-Schwenkachse schwenkbar ist, wobei sich die Rolleneinheit bezüglich der Rollenachse beiderseits des Achseinheit-Schwenklagers erstreckt. Die Achseinheit kann die Rollenachse definieren, um die die Rolleneinheit drehbar ist. Das heißt die Rollenachse kann bezüglich der Achseinheit körperfest sein. Die Rolleneinheit kann beweglich oder fest mit der Achseinheit verbunden sein. Bevorzugt ist die Achseinheit bezüglich der Rollenachse langgestreckt, das heißt sie weist in Richtung der Rollenachse eine (zum Beispiel um wenigstens das Doppelte oder das Fünffache) größere Ausdehnung auf als quer zur Rollenachse. Prinzipiell ist aber auch eine nichtlanggestreckte Form denkbar und der Begriff "Achseinheit" ist insofern nicht einschränkend auszulegen. Die Achseinheit ist allerdings nicht stationär am Rahmen befestigt, sondern über ein Achseinheit-Schwenklager schwenkbar mit dem rahmenseitigen Lagerabschnitt verbunden. "Rahmenseitig" bedeutet, dass der Lagerabschnitt entweder am Rahmen ausgebildet ist oder zumindest indirekt mit dem Rahmen verbunden ist. Insbesondere kann der Lagerabschnitt ein Teil der oben genannten Heckklappe sein. Gegenüber dem Lagerabschnitt ist die Achseinheit, zusammen mit der an ihr angeordneten Rolleneinheit, schwenkbar, wobei die entsprechende Achseinheit-Schwenkachse nicht parallel zur Rollenachse verläuft, sondern im Winkel hierzu, das heißt der Winkel zwischen Achseinheit-Schwenkachse und Rollenachse ist von Null verschieden. Bevorzugt beträgt der Winkel wenigstens 70°, wenigstens 80° oder wenigstens 85°. Bevorzugt ist die Achseinheit-Schwenkachse eindeutig definiert, es wäre aber auch denkbar, dass dies nicht der Fall ist, so dass eine Schwenkbarkeit um mehr als eine Achse gegeben ist. Durch das Schwenken der Achseinheit sowie der Rolleneinheit wird auch die Rollenachse um die Achseinheit-Schwenkachse geschwenkt, das heißt je nach Schwenkstellung der Achseinheit ändert sich der Verlauf der Rollenachse bezüglich des Lagerabschnitts.

Die Rolleneinheit erstreckt sich bezüglich der Rollenachse beiderseits des Achseinheit-Schwenklagers. Das heißt entlang der Richtung, die durch die Rollenachse gegeben ist, erstreckt sich die Rolleneinheit auf beiden Seiten des Achseinheit-Schwenklagers. Dies bedeutet nicht, dass die Rollenachse durch das Achseinheit-Schwenklager verlaufen muss, sie kann auch zu diesem versetzt sein. Man kann bei der Rolleneinheit somit einen Teil identifizieren, der einerseits des Achseinheit-Schwenklagers angeordnet ist und einen anderen Teil, der andererseits desselben angeordnet ist. Bevorzugt unterscheiden sich die beiden Teile um höchstens 20% oder 10% hinsichtlich ihrer Länge in Richtung der Rollenachse. Jeder der beiden Teile führt das Presselement anteilig. Wenn aufgrund einer ungleichmäßigen, asymmetrischen Erntegutaufnahme der Erntegutballen asymmetrisch aufgebaut wird, also auf einer Seite größer ist als auf der anderen, führt dies dazu, dass das Presselement ungleichmäßig belastet wird. Weist beispielsweise die linke Seite des Ballens einen größeren Durchmesser auf als die rechte, wird ein erhöhter Zug auf die linke Seite des Presselements ausgeübt. Dies führt zum einen dazu, dass das Presselement dem Zug nachgebend nach rechts ausweicht. Zum anderen wird der linke Teil der Rolleneinheit durch das außen anliegende Presselement stärker beaufschlagt und somit durch eine Schwenkbewegung um die Achseinheit-Schwenkachse nach innen gedrückt, während sich der rechte Teil nach außen bewegt. Hierdurch erhält das Presselement zumindest im Bereich dieser Rolleneinheit eine Tendenz sich nach links zu bewegen oder wenigstens seine Bewegung nach rechts zu beenden. Damit wird der Lauf des Presselements verbessert. Neben der verbesserten Laufführung des Presselements kann anhand der Schwenkposition der Achseinheit bezüglich der Achseinheit-Schwenkachse der ungleichmäßige Ballenaufbau erkannt werden, wie nachfolgend noch erläutert wird. Dabei ist es von Vorteil, dass die Schwenkbewegung der Achseinheit auf einer Differenz von Kräften beziehungsweise Drehmomenten beruht, welche auf die beiden Teile der Rolleneinheit wirken. Zumindest bezüglich des Lagerabschnitts führt eine beiderseitig gleiche Belastung der Rolleneinheit zu keiner Auslenkung und somit zu keiner Schwenkbewegung um die Achseinheit-Schwenkachse.

Es ist möglich, dass die Rolleneinheit starr mit der Achseinheit verbunden ist. Dabei sind Ausgestaltungen denkbar, bei denen keine klare Abgrenzung zwischen der Rolleneinheit und der Achseinheit möglich ist. Bei einer starren Verbindung von Rolleneinheit und Achseinheit kann das Achseinheit-Schwenklager zusätzlich als Drehlager fungieren, über welches die Achseinheit und die hiermit verbundene Rolleneinheit um die Rollenachse drehbar sind. Beispielsweise könnte das Achseinheit-Schwenklager als sphärisches Gleitlager oder Wälzlager ausgebildet sein. Eine andere bevorzugte Ausführungsform sieht vor, dass die Rolleneinheit um die Rollenachse drehbar an der Achseinheit gelagert ist. In einigen Ausgestaltungen kann man auch davon sprechen, dass die Rolleneinheit auf der Achseinheit drehbar gelagert ist. Die Achseinheit kann- wenigstens ein Wälzlager aufweisen, das die Drehbarkeit der Rolleneinheit verbessert.

Bevorzugt verläuft die Achseinheit-Schwenkachse senkrecht zur Rollenachse. Kleinere Abweichungen hiervon bringen i. Allg. keine wesentlichen Nachteile mit sich, sind allerdings auch nicht vorteilhaft. Durch den beschriebenen Verlauf der Rollenachse ist sichergestellt, dass das Presselement bei seiner Bewegung über die Rolleneinheit keine (nennenswerten) seitlichen Kräfte ausübt, was im Allgemeinen nachteilig wäre. Bevorzugt verläuft die Achseinheit-Schwenkachse parallel zu einer Ebene, die dem tangentialen Verlauf des Presselements auf der Rolleneinheit entspricht. Man könnte auch sagen, dass die Achseinheit-Schwenkachse bevorzugt parallel zu einer (lokalen) Bewegungsrichtung des Presselements auf der Rolleneinheit verläuft, also in einem Bereich, in dem das Presselement durch die Rolleneinheit geführt ist.

Im Rahmen der Erfindung ist es bevorzugt, dass die Rolleneinheit bezüglich der Rollenachse symmetrisch beiderseits des Achseinheit-Schwenklagers ausgebildet ist. Dementsprechend ist das Achseinheit-Schwenklager entlang der Rollenachse gesehen genau mittig der Rolleneinheit angeordnet. Dabei ist es allerdings möglich, dass das Achseinheit-Schwenklager quer zur Rollenachse versetzt ist und unter Umständen sogar außerhalb des Radius der Rolleneinheit liegt. Bei einer (deutlich) asymmetrischen Anordnung der Rolleneinheit ist es schwierig, wenngleich nicht unmöglich, ein asymmetrisches Laufverhalten des Presselements zu vermeiden.

Unter Umständen kann das Presselement als endloses Kettenstabband ausgebildet sein, wobei die Rolleneinheiten normalerweise dazu ausgebildet sind, formschlüssig mit den Ketten und/oder den Stäben einzugreifen, um eine schlupffreie Führung zu gewährleisten. Auch wäre es denkbar, dass das Presselement eine Mehrzahl separater, bezüglich der Querachse nebeneinander verlaufender Pressriemen aufweist. Die Vorteile der Erfindung lassen sich allerdings besonders gut realisieren, wenn das Presselement ein einzelner, in Richtung der Rollenachse durchgehend ausgebildeter Pressriemen ist. Die Breite des Pressriemens entspricht dabei bevorzugt wenigstens 60% oder wenigstens 80 % der Ausdehnung der Rolleneinheit entlang der Rollenachse. Die Ausgestaltung des Pressriemens kann dabei grundsätzlich dem Stand der Technik entsprechen, wobei der Pressriemen zwar biegsam ist, wodurch die Führung über die verschiedenen Rolleneinheiten erleichtert wird, allerdings nur wenig zugelastisch ist, so dass seine Gesamtlänge annähernd konstant bleibt.

Es sind Ausgestaltungen denkbar, bei welchen die Rolleneinheit durch eine einzige, durchgehende Rolle realisiert ist. Dabei könnte die Achseinheit als Hohlwelle ausgebildet sein, in deren Innerem eine Aufhängung verläuft, die den Lagerabschnitt bildet und die einerseits mit dem Rahmen sowie andererseits über das Achseinheit-Schwenklager mit der Achseinheit verbunden ist. Dies ist allerdings konstruktiv und wartungstechnisch aufwändig. Bevorzugt weist die Rolleneinheit zwei Teilrollen auf, die bezüglich der Rollenachse auf gegenüberliegenden Seiten des Achseinheit-Schwenklagers angeordnet sind. Man kann also sagen, dass das Achseinheit-Schwenklager zwischen den Teilrollen angeordnet ist. Es ist daher für Wartung und Montage beziehungsweise Demontage gut zugänglich. Zwischen den beiden Teilrollen bleibt bei dieser Ausgestaltung ein Zwischenraum, in dem das Achseinheit-Schwenklager angeordnet ist. Das heißt die Teilrollen sind entlang der Rollenachse beabstandet. Unter Umständen bildet jede der Teilrollen wenigstens annähernd eine Hälfte der Rolleneinheit, so dass man auch von Halbrollen oder Rollenhälften sprechen kann.

Es ist bevorzugt, dass der Lagerabschnitt wenigstens während der Formung des Erntegutballens bezüglich des Rahmens positionsfest ist. Dies bedeutet entweder, dass der Lagerabschnitt starr am Rahmen montiert oder sogar Teil desselben ist, oder aber, dass der Lagerabschnitt zum Beispiel positionsfest an der Auswurfklappe montiert ist, die während der Ballenformung geschlossen ist und somit positionsfest gegenüber dem Rahmen verbleibt. Lediglich nach Abschluss der Ballenformung wird die Auswurfklappe geöffnet und bewegt sich somit gegenüber dem Rahmen. Auf diese Weise kann die Achseinheit während der Ballenformung nur die beschriebene Schwenkbewegung ausführen, was zum Beispiel die Erkennung einer Ballenform anhand der aktuellen Schwenkposition der Achseinheit erleichtert.

Eine Möglichkeit besteht darin, das Achseinheit-Schwenklager als Schwenklager mit einem Freiheitsgrad vorzusehen, welches für sich genommen die Achseinheit-Schwenkachse eindeutig definiert. Aufgrund der Länge der Achseinheit und der sich in Verbindung hiermit ergebenden Drehmomente kann es allerdings günstig sein, die Position sowie die Schwenkbewegung der Achseinheit durch eine Führung abzusichern. Gemäß einer entsprechenden Ausgestaltung weist das Achseinheit-Schwenklager zwei Freiheitsgrade auf und die Achseinheit-Schwenkachse ist durch wenigstens ein bezüglich des Lagerabschnitts positionsfestes erstes Führungselement definiert, mit welchem ein an der Achseinheit angeordnetes zweites Führungselement eingreift. Das Achseinheit-Schwenklager weist wenigstens zwei rotatorische Freiheitsgrade auf und kann beispielsweise als Kugelgelenk ausgebildet sein. Dementsprechend definiert das Rollenachse-Schwenklager für sich genommen keine eindeutige Schwenkachse. Diese wird durch das erste Führungselement und dessen Zusammenspiel mit dem zweiten Führungselement definiert. Das erste Führungselement ist positionsfest bezüglich des Lagerabschnitts, das heißt es ist entweder am Lagerabschnitt ausgebildet oder mit diesem positionsfest verbunden. Es kann beispielsweise als eine Führungskulisse ausgebildet sein. Das zweite Führungselement kann ein klar abgrenzbares Element an der Achseinheit sein, es kann sich aber auch um einen Abschnitt oder Bereich der Achseinheit handeln. Im einfachsten Fall ist die Achseinheit durch eine Führungskulisse oder einen Führungsschlitz hindurchgeführt. Die Geometrie der Führungskulisse bestimmt dabei den Verlauf der Achseinheit-Schwenkachse. Die Führungselemente sind vorteilhaft entlang der Rollenachse außenseitig der Rolleneinheit angeordnet, also links oder rechts derselben. Es versteht sich, dass beiderseits der Rolleneinheit jeweils ein erstes sowie zweites Führungselement vorgesehen sein können.

Eine bevorzugte Weiterbildung der Erfindung sieht vor, dass wenigstens ein Rückstellelement wenigstens indirekt zwischen der Achseinheit und dem Lagerabschnitt zwischengeordnet und dazu eingerichtet ist, die Achseinheit in Richtung auf eine Ruhelage zu beaufschlagen, in welcher die Rollenachse parallel zur Querachse der Rundballenpresse verläuft. Das Rückstellelement wirkt direkt oder indirekt zwischen der Achseinheit und dem Lagerabschnitt. Durch das wenigstens eine Rückstellelement ist eine Ruhelage definiert, welche die Achseinheit einnimmt, wenn über das Presselement keine asymmetrischen Kräfte übertragen werden. Dabei entspricht die Ruhelage einer Position, in welcher die Rollenachse parallel zur Querachse ausgerichtet ist. Wird die Achseinheit durch Schwenken um das Achseinheit-Schwenklager aus der Ruhelage ausgelenkt, erzeugt das wenigstens eine Rückstellelement eine Rückstellkraft sowie ein rückstellendes Drehmoment, das bestrebt ist, die Achseinheit in die Ruhelage zurückzuführen.

Es ist im Rahmen der Erfindung möglich und auch technisch sinnvoll, ein Rückstellelement beispielsweise im Bereich des Achseinheit-Schwenklagers anzuordnen. Ein solches Rückstellelement könnte als Drehfeder ausgebildet sein. Eine andere Ausgestaltungen sieht vor, dass wenigstens ein Rückstellelement bezüglich der Rollenachse außenseitig der Rolleneinheit angeordnet ist. "Außenseitig" bedeutet in diesem Fall, dass das Rückstellelement vom Achseinheit-Schwenklager aus gesehen jenseits der Rolleneinheit angeordnet ist. Da die Achseinheit sowie die Rolleneinheit sich entlang der Querachse erstrecken, kann man auch davon sprechen, dass das jeweilige Rückstellelement entweder links oder rechts der Rolleneinheit angeordnet ist. Durch diese Anordnung ist das Rückstellelement normalerweise leichter zugänglich als bei einer mittigen Anordnung und kann außerdem mit einer vergleichsweise geringen Kraft ein großes Drehmoment auf die Achseinheit ausüben.

Grundsätzlich ist es möglich, die gewünschte Rückstellung mit einem einzigen Rückstellelement zu erreichen, welches auf einer Seite der Rolleneinheit angeordnet ist. Dies hat allerdings zur Folge, dass das Rückstellelement je nach Auslenkung entgegengesetzte Kräfte ausüben muss. Außerdem läuft das Rückstellelement in der Ruhelage durch eine Art Totpunkt, in dem es keine Kraft ausübt. ZUM BEISPIEL eine Schraubenfeder ist in diesem Fall ohne Spannung. Wenngleich dies nicht zwangsläufig relevante Nachteile sein müssen, lassen sie sich vermeiden. Eine entsprechende Ausführungsform sieht vor, dass bezüglich der Rollenachse beiderseits außenseitig der Rolleneinheit jeweils wenigstens ein Rückstellelement angeordnet ist. Das heißt wenigstens ein Rückstellelement ist "links" außenseitig der Rolleneinheit angeordnet und wenigstens ein Rückstellelement ist "rechts" außenseitig der Rolleneinheit angeordnet. Die beiden Rückstellelemente üben vorteilhaft auch in der Ruhelage jeweils eine Kraft und ein Drehmoment auf die Achseinheit aus, wobei sich die Drehmomente allerdings gegenseitig aufheben. Bevorzugt sind die Rückstellelemente so angeordnet und ausgestaltet, dass in jeder Position der Achseinheit jedes Rückstellelement eine Kraft in die gleiche Richtung ausübt, zum Beispiel stets eine Zugkraft. Ein Element wie eine Spiralfeder kann somit immer unter Spannung bleiben.

Ein Rückstellelement kann im einfachsten Fall direkt an der Achseinheit ansetzen. Unter Umständen ist es aber vorteilhaft, wenn ein oder mehrere Elemente zwischengeordnet sind, welche eine Kraft zwischen dem Rückstellelement und der Achseinheit übertragen. Eine vorteilhafte Ausgestaltung sieht vor, dass wenigstens ein Rückstellelement mit der Achseinheit über einen Schwenkhebel zusammenwirkt, der relativ zum Lagerabschnitt schwenkbar ist. Der Schwenkhebel kann über ein Schwenklager entweder direkt oder indirekt mit dem Lagerabschnitt verbunden sein. Er kann insbesondere am Rahmen selbst schwenkbar gelagert sein oder an der oben genannten Heckklappe. Vorteilhaft sind das Schwenklager des Schwenkhebels und das Achseinheit-Schwenklager an derselben, in sich starren Baugruppe angeordnet, die somit ein gemeinsames Bezugssystem für den Schwenkhebel und für die Position der Achseinheit bildet. Der Schwenkhebel bietet zum einen die Möglichkeit einer Über- oder Untersetzung der Bewegung der Achseinheit, zum anderen bietet er die Möglichkeit einer Umlenkung der Bewegung, was zum Beispiel aus Gründen des Bauraums vorteilhaft sein kann. Auf diese Weise lässt sich auch beispielsweise ein lang bauendes Rückstellelement wie eine Spiralfeder in günstiger Position und Orientierung anordnen.

Abgesehen von der beschriebenen Führungsfunktion kann durch die schwenkbare Anordnung der Achseinheit mit der Rolleneinheit auch eine Information über einen ungleichmäßigen Aufbau des Erntegutballens gewonnen werden. Hierzu wird die Position der Achseinheit herangezogen, die sich wie beschrieben in Abhängigkeit von der aktuellen Form des Erntegutballens ändert. Gemäß einer Ausführungsform ist ein Positionssensor dazu eingerichtet, ein Positionssignal zu erzeugen, das einer aktuellen Position der Achseinheit bezüglich der Achseinheit-Schwenkachse entspricht. Bei der Position kann es sich um eine Absolutposition oder Relativposition handeln. Es kann ein Schwenkwinkel (zum Beispiel in Grad) bestimmt werden oder ein Schwenkweg (zum Beispiel in Millimetern). Beides kann zum Beispiel in Relation zur oben genannten Ruhelage gemessen werden. Der Positionssensor kann die Position berührungslos ermitteln, zum Beispiel optisch oder durch Ultraschall. Insbesondere kann er mechanisch wenigstens indirekt an die Achseinheit gekoppelt sein, was eine besonders kostengünstige Ausgestaltung ermöglicht. Der Positionssensor kann die Position zum Beispiel im Bereich des Achseinheit-Schwenklagers ermitteln. Vorteilhaft ermittelt er die Position außenseitig der Rolleneinheit. Er erzeugt ein - analoges oder digitales - Positionssignal, das der Position entspricht. Das heißt die Position kann - im Rahmen der jeweiligen Messgenauigkeit - aus dem Positionssignal eindeutig ermittelt werden.

Soweit ein Rückstellelement über einen Schwenkhebel mit der Achseinheit zusammenwirkt, ist es bevorzugt, dass der Positionssensor an einen Schwenkhebel gekoppelt ist. Hierzu sind unterschiedliche Ausgestaltungen denkbar. Beispielsweise kann ein Koppelstab einerseits gelenkig mit dem Schwenkhebel und andererseits gelenkig mit dem Positionssensor verbunden sein. Durch einen geeigneten Ansatzpunkt am Schwenkhebel kann - bei einer gegebenen Auslenkung der Achseinheit - eine mehr oder weniger starke Auslenkung auf Seiten des Positionssensors erzeugt werden. Das heißt der Schwenkhebel kann für eine Über- oder Untersetzung der Auslenkung genutzt werden.

In der Regel resultiert ein ungleichmäßiger Aufbau des Ballens daraus, dass die aktuelle Fahrspur der Rundballenpresse nicht optimal zu einem am Boden liegenden Schwad ausgerichtet ist. Ist zum Beispiel der Ballen auf einer Seite dicker, ist der Schwad zu dieser Seite hin versetzt und ein gleichmäßigerer Aufbau lässt sich durch Lenken zu dieser Seite erreichen. Eine Weiterbildung der Erfindung sieht daher vor, dass eine Auswertungseinheit dazu eingerichtet ist, in Abhängigkeit vom Positionssignal ein Spursignal zu erzeugen, welches einer Fahrspurkorrektur der Rundballenpresse entspricht. Die Auswertungseinheit kann insbesondere in die Rundballenpresse integriert sein. Sie empfängt das Positionssignal und erzeugt in Abhängigkeit hiervon ein Spursignal, das wenigstens qualitative, bevorzugt quantitative Informationen darüber enthält, wie die Fahrspur korrigiert werden muss. Das Spursignal kann für eine Anzeige benutzt werden, durch die ein Fahrer auf die notwendige Fahrspurkorrektur hingewiesen wird. Es könnte aber auch direkt zur Ansteuerung einer Lenkung eingesetzt werden. Bei einer selbstfahrenden Rundballenpresse kann das Spursignal intern genutzt werden. Bei einer gezogenen Rundballenpresse kann es an einen Schlepper übermittelt werden, wo es beispielsweise zur Erzeugung einer Anzeige für den Fahrer genutzt werden kann.

Die Aufgabe wird weiterhin gelöst mit einem Verfahren zum Betreiben einer Rundballenpresse mit einem Rahmen sowie einer Pressvorrichtung, durch welche eine Presskammer zur Formung eines Erntegutballens wenigstens teilweise definiert wird, und die ein endloses Presselement aufweist, welches gegenüber einem Rahmen umlaufend angetrieben wird und über eine Mehrzahl von gegenüber dem Rahmen drehbaren Rolleneinheiten geführt ist.

Erfindungsgemäß ist wenigstens eine Rolleneinheit an einer Achseinheit angeordnet und dreht sich um eine Rollenachse, wobei die Achseinheit über ein Achseinheit-Schwenklager mit einem rahmenseitigen Lagerabschnitt verbunden ist, so dass sie zusammen mit der Rolleneinheit um eine im Winkel zur Rollenachse verlaufende Achseinheit-Schwenkachse schwenkt, wobei sich die Rolleneinheit bezüglich der Rollenachse beiderseits des Achseinheit-Schwenklagers erstreckt, wobei ein Positionssensor ein Positionssignal erzeugt, das einer aktuellen Position der Achseinheit bezüglich der Achseinheit-Schwenkachse entspricht, und eine Auswertungseinheit in Abhängigkeit vom Positionssignal ein Spursignal erzeugt, welches einer Fahrspurkorrektur der Rundballenpresse entspricht.

Die genannten Begriffe wurden mit Bezug auf die erfindungsgemäße Rundballenpresse erläutert und werden daher nicht nochmals erklärt. Vorteilhafte Ausgestaltungen des erfindungsgemäßen Verfahrens entsprechen denen der erfindungsgemäßen Rundballenpresse.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine seitliche Schnittdarstellung einer erfindungsgemäßen Rundballenpresse;
- Fig. 2: eine perspektivische Darstellung der Rundballenpresse aus Fig.1 in einem ersten Zustand;
- Fig. 3: eine Seitenansicht eines Details der Rundballenpresse aus Fig.1 im ersten Zustand;
- Fig. 4: eine perspektivische Darstellung der Rundballenpresse aus Fig.1 in einem zweiten Zustand; und
- Fig. 5: eine Seitenansicht eines Details der Rundballenpresse aus Fig.1 im zweiten Zustand.

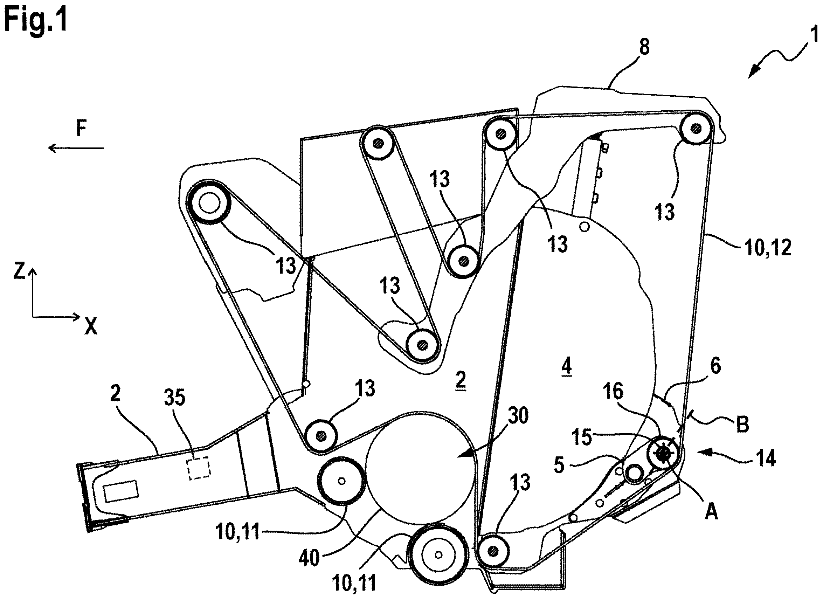

Fig. 1 bis 5 zeigen eine Rundballenpresse 1 gemäß der vorliegenden Erfindung, mit der ein erfindungsgemäßes Verfahren durchgeführt werden kann. In den Figuren sind eine Längsachse X, eine Querachse Y sowie eine Hochachse Z der Rundballenpresse 1 eingezeichnet. Die Rundballenpresse 1 ist dazu vorgesehen, von einer Zugmaschine beziehungsweise einem Schlepper (nicht dargestellt) gezogen zu werden. An einem Rahmen 2 der Rundballenpresse 1 ist abgesehen von (nicht dargestellten) Laufrädern, auf welchen die Rundballenpresse 1 aufsteht, eine Pressvorrichtung 10 angeordnet, die eine Presskammer 30 variabler Größe zur Bildung eines Erntegutballens 40 ausbilden kann. Das Erntegut wird durch verschiedene Elemente, die aus Übersichtlichkeitsgründen nicht dargestellt sind, der Presskammer 30 zugeführt. Mit einer in Fahrtrichtung F vorderseitig am Rahmen 2 angeordneten Pick-up wird das Erntegut wie zum Beispiel Stroh, Heu oder Gras, vom Boden aufgenommen und gelangt weiter zu einem Schneidrotor- oder Förderrotor, der das Erntegut ergreift, ggf. zerschneidet und weiter entgegen der Fahrtrichtung F und durch einen Förderkanal in Richtung des Eingangs der Presskammer 30 transportiert.

Die Pressvorrichtung 10 weist in diesem Fall zwei Presswalzen 11 sowie wenigstens einen als Presselement fungierenden Pressriemen 12 auf, welche zusammen die Presskammer 30 definieren. Die Presswalzen 11 sowie der Pressriemen 12 bewirken eine Rotation des Erntegutballens 40 und gleichzeitig ein Verpressen des Ernteguts. Der Pressriemen 12 ist über eine Mehrzahl drehbar gelagerten Rolleneinheiten 13, 16 geführt und wird durch diese unter Spannung gehalten. Wenn der Erntegutballen 40 fertiggestellt wurde, wird er noch innerhalb der Presskammer 30 mit einem hier nicht dargestellten Bindematerial (beispielsweise einem Netz) umwickelt, bevor er schließlich entgegen der Fahrtrichtung F nach hinten ausgeworfen wird. Hierzu wird eine schwenkbar mit dem Rahmen 2 verbundene Auswurfklappe 4 mittels Klappenaktoren 7 geöffnet

Einige Rolleneinheiten 13 sind um ortsfeste Drehachsen drehbar am Rahmen 2 gelagert, während andere an einer Spannschwinge 8 gelagert sind, die schwenkbar mit dem Rahmen 2 verbunden ist. Da der Pressriemen 12 eine annähernd konstante Länge aufweist und ständig unter Spannung gehalten werden muss, muss die Spannschwinge 8 ausgelenkt werden, um unterschiedliche Größen des Erntegutballens 40 auszugleichen. Einige Rolleneinheiten 13, 16 sind wiederum an der Auswurfklappe 4 gelagert und werden beim Auswurfvorgang mit dieser mitgeschwenkt. Auch während des Schwenkvorgangs der Auswurfklappe 4 kann der Pressriemen 12 durch Positionsveränderungen der Spannschwinge 8 unter Spannung gehalten werden.

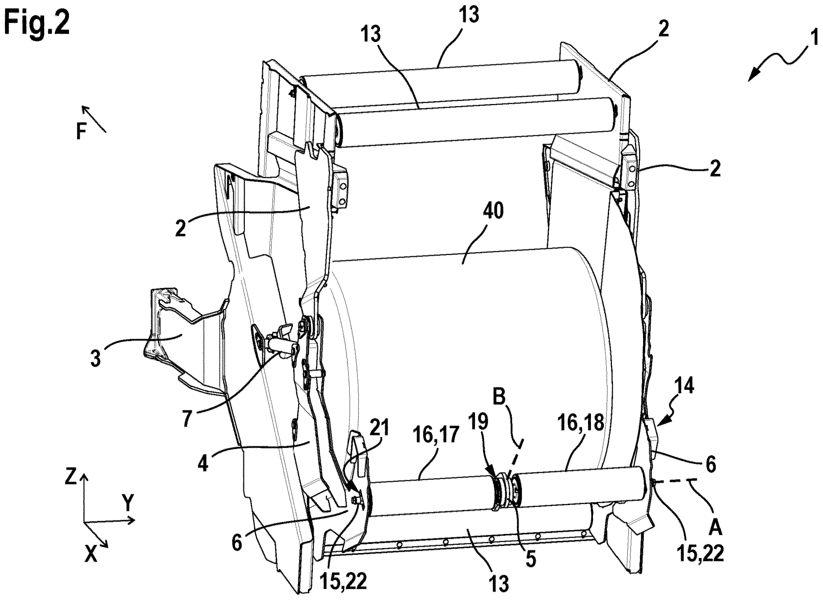

Die meisten der Rolleneinheiten 13 sind um Drehachsen drehbar, die gleichbleibend parallel zu Querachse Y verlaufen, und weisen eine einteilige zylinderartige Form auf. Der Aufbau einer an der Auswurfklappe 4 angeordneten Rolleneinheit 16 weicht hiervon in mehrfacher Hinsicht ab, wie nachfolgend mit Bezug auf Fig.2 bis 5 erläutert wird. Diese Rolleneinheit 16, welche zu einer Führungsanordnung 14 gehört, weist eine erste Teilrolle 17 und eine hiervon beabstandete zweite Teilrolle 18 auf, die um eine gemeinsame Rollenachse A drehbar an einer Achseinheit 15 gelagert sind. Die Achseinheit 15 ist in diesem Fall durch eine entlang der Rollenachse A durchgehend ausgebildete Stahlachse gebildet. Man kann auch sagen, dass die Achseinheit 15 durch ihren Verlauf die Rollenachse A definiert. Die Achseinheit 15 ist allerdings nicht ortsfest gelagert, sondern über ein Achseinheit-Schwenklager 19 mit einem Lagerabschnitt 5 verbunden, der Teil der Auswurfklappe 4 ist. Der Lagerabschnitt 5 kann als rahmenseitig angesehen werden, da die Auswurfklappe 4 mit dem Rahmen 2 verbunden ist. Insbesondere bleibt die Auswurfklappe 4 während der Formung des Erntegutballens 40 geschossen, so dass der Lagerabschnitt 5 in dieser Zeit positionsfest bezüglich des Rahmens 2 ist. Das Achseinheit-Schwenklager 19 ist bezüglich der Rollenachse A zwischen den Teilrollen 17, 18 angeordnet, wobei diese sich symmetrisch beiderseits des Achseinheit-Schwenklagers 19 erstrecken.

Das Achseinheit-Schwenklager 19 ist nach Art eines Kugelgelenks ausgebildet und weist somit zwei Freiheitsgrade auf. Allerdings weist die Auswurfklappe 4 beiderseits der Rolleneinheit 16 Wangenabschnitte 6 mit Führungsschlitzen 21 auf. Letztere dienen als erste Führungselemente, in denen jeweils ein Endabschnitt 22 der Achseinheit 15 aufgenommen ist, der als zweites Führungselement fungiert. Die Führungsschlitze 21 sind gerade ausgebildet und verlaufen parallel zueinander, so dass sich die Achseinheit 15 nur in einer Ebene bewegen kann. Außerdem sind sie an den Wangenabschnitten 6 ausgebildet, die positionsfest gegenüber dem Lagerabschnitt 5 sind. Daher definieren die Führungsschlitze 21 eine Achseinheit-Schwenkachse B, um welche die Achseinheit 15 schwenkbar ist. Die Achseinheit-Schwenkachse B verläuft senkrecht zu einer virtuellen Ebene, in der beide Führungsschlitze 21 verlaufen. Ebenso verläuft sie senkrecht zur Rollenachse A. Ihr Verlauf ist allerdings parallel zu einer (lokalen) Bewegungsrichtung des Pressriemens 12 auf der Oberfläche der Rolleneinheit 16.

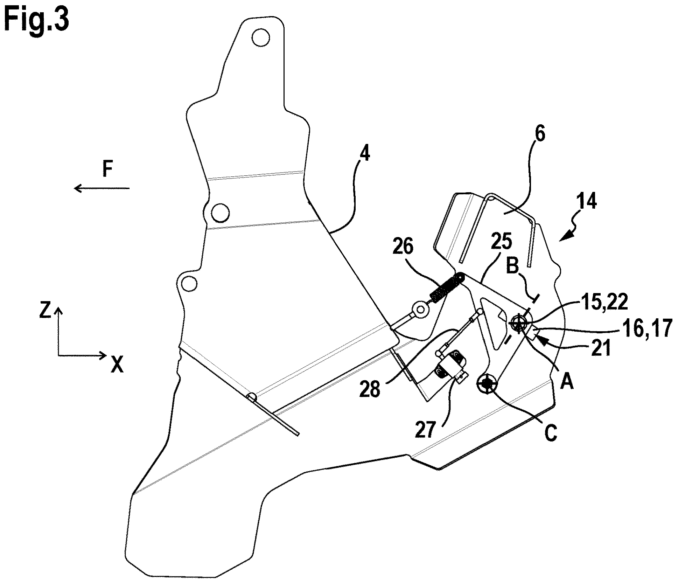

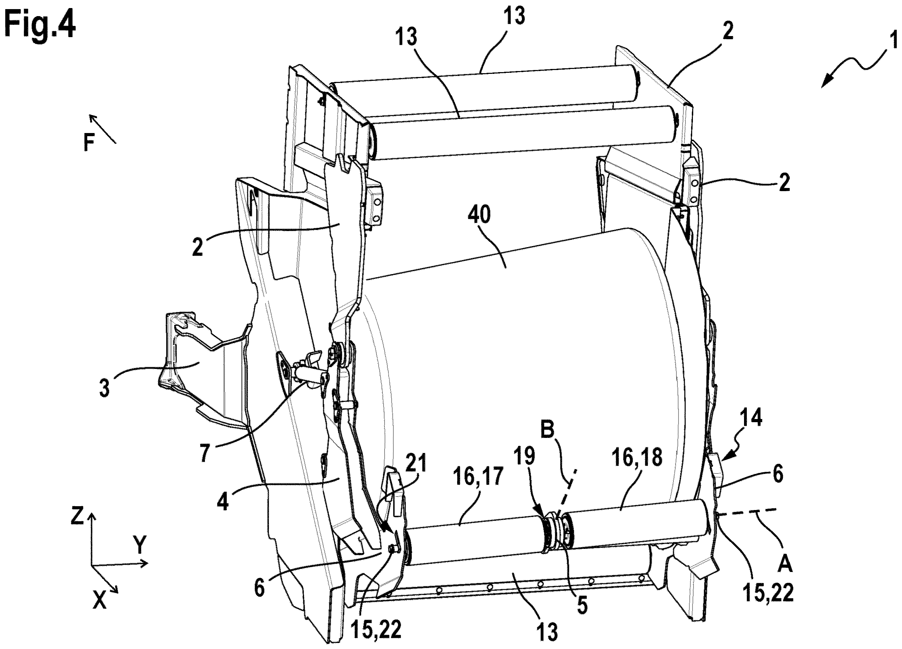

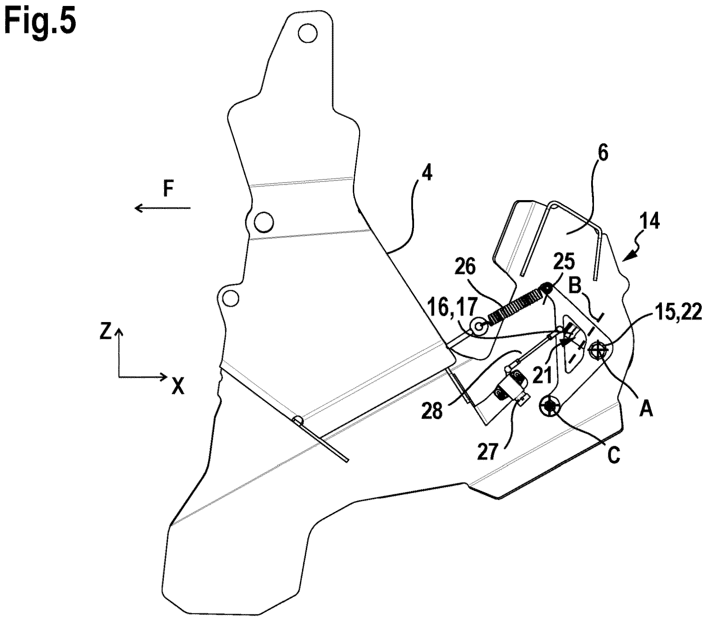

Bezüglich der Rollenachse A außenseitig des jeweiligen Wangenabschnitts 6 ist ein Schwenkhebel 25 angeordnet, der mit einem als Schraubenfeder ausgebildeten Rückstellelement 26 zusammenwirkt. Der Schwenkhebel 25 und das Rückstellelement 26 sind aus Gründen der Übersichtlichkeit in Fig.2 und 4 weggelassen und nur in Fig. 3 und 5 dargestellt. Der Schwenkhebel 25 ist um eine parallel zur Querachse Y verlaufende Hebel-Schwenkachse C schwenkbar am Wangenabschnitt 6 gelagert. Er ist einerseits mit einem Endabschnitt 22 der Achseinheit 15 verbunden sowie andererseits mit dem Rückstellelement 26, das an seinem gegenüberliegenden Ende mit dem Wangenabschnitt 6 verbunden ist. Die Schwenkhebel 25 sowie die Rückstellelemente 26 sind auf beiden Seiten der Achseinheit 16 gleichartig oder symmetrisch ausgebildet. Die Funktion des Schwenkhebels 25 besteht in dieser Ausgestaltung einerseits in einer Kraftumlenkung, wodurch die Rückstellelemente 26 bauraummäßig besser integriert werden können. Zusätzlich wird eine Verstärkung der Federkraft erreicht, da das jeweilige Rückstellelement 26 in größerem Abstand von der Hebel-Schwenkachse C ansetzt als der Endabschnitt 22. Auf einer Seite ist ein als Positionssensor dienender Drehwinkelsensor 27 über einen Koppelstab 28 mit dem Schwenkhebel 25 verbunden. Aus dem vom Drehwinkelsensor 27 erzeugten Positionssignal lässt sich die aktuelle Position des Endabschnitts 22 eindeutig ermitteln. Da das Achseinheit-Schwenklager 19 am Lagerabschnitt 5 angeordnet ist, der positionsfest gegenüber dem Wangenabschnitt 6 ist, lässt sich aus der Position des Endabschnitts 22 die Winkelposition der Achseinheit 15 sowie der Rolleneinheit 16 bezüglich der Achseinheit-Schwenkachse B eindeutig herleiten. Das heißt diese kann mit einem einzigen Drehwinkelsensor 27 ermittelt werden.

Aufgrund der - abgesehen vom Koppelstab 28 und dem Drehwinkelsensor 27 - symmetrischen Ausgestaltung der Führungsanordnung 14 üben die beiderseitigen Rückstellelemente 26 betragsmäßig gleiche, allerdings entgegengesetzte Drehmomente auf die Achseinheit 15 aus, wenn letztere in einer Ruhelage angeordnet ist, in welcher die Rollenachse A parallel zur Querachse Y verläuft. Beide Rückstellelemente 26 sind dabei gespannt, wenngleich sie insgesamt kein resultierendes Drehmoment ausüben. Wird die Achseinheit 15 aus der Ruhelage ausgelenkt, erzeugen die Rückstellelemente 26 insgesamt ein rückstellendes Drehmoment.

Die Funktion der Führungsanordnung 14 wird nun mit Bezug auf Fig. 2 bis 5 erläutert. Sofern während der Formung des Erntegutballens 40 das Erntegut wenigstens annähernd symmetrisch aufgenommen wird, ergibt sich ein näherungsweise zylinderförmiger Erntegutballen 40, wie in Fig.2 dargestellt. Dieser führt zu einer bezüglich der Querachse Y symmetrischen Belastung des Pressriemens 12, die u.a. auf die Rolleneinheit 16 der Führungsanordnung 14 übertragen wird. Da sämtliche auftretenden Kräfte symmetrisch bezüglich der Querachse Y sind, ist die Achseinheit 15 in der Ruhelage. Wird allerdings das Erntegut deutlich asymmetrisch aufgenommen, zum Beispiel weil die Fahrspur der Rundballenpresse 1 zu einem am Boden liegenden Schwad versetzt ist, kann dies zu einem asymmetrischen Ballenaufbau führen. Der Erntegutballen 40 ist dann kegelstumpfartig geformt, wie in Fig.4 übertrieben dargestellt ist. Dementsprechend wird ein asymmetrischer Zug auf den Pressriemen 12 ausgeübt. Da der Pressriemen 12 kaum dehnbar ist, wird er zum einen in Richtung des kleineren Ballendurchmessers ausgelenkt, bezüglich Fig.4 also nach links. Zum anderen wird der asymmetrische Zug an die Rolleneinheit 16 weitergegeben, das heißt auf der in Fig.4 rechten Seite wird eine stärkere Kraft ausgeübt als auf der linken Seite. Hieraus ergibt sich ein Drehmoment, das die Achseinheit 15 aus der Ruhelage auslenkt. Die auf der rechten Seite angeordnete zweite Teilrolle 18 bewegt sich dabei zur Presskammer 30 hin nach innen, während sich die auf der linken Seite angeordnete erste Teilrolle 17 nach außen bewegt, wie insbesondere in Fig.5 erkennbar ist. Dies wirkt für sich genommen der seitlichen Ausweichbewegung des Pressriemens 12 entgegen, dieser wird also tendenziell eher bezüglich der Querachse Y mittig gehalten.

Die Rückstellelemente 26 wirken qualitativ der Auslenkung der Achseinheit 15 entgegen. Im vorliegenden Beispiel bewirken sie allerdings Rückstellkräfte, die vergleichsweise klein gegenüber den Kräften sind, die zwischen Pressriemen 12 und Rolleneinheit 16 wirken können. Solange der Erntegutballen 40 allerdings einen asymmetrischen Zug auf den Pressriemen 12 ausübt, ist die Kraft der Rückstellelemente demgegenüber normalerweise schwach und beeinflusst die Position der Achseinheit 15 kaum. Die Auslenkung der Achseinheit 15 wird über den Drehwinkelsensor 27 registriert. Dieser liefert das erwähnte Positionssignal, das in einem eindeutigen Zusammenhang mit der Winkelposition der Achseinheit 15 steht und unter Umständen sogar annähernd linear abhängig von dieser sein kann. In jedem Fall lässt sich aus dem Positionssignal auf einen symmetrischen oder asymmetrischen Aufbau des Erntegutballens 40 schließen.

Das Positionssignal kann wiederum an eine in Fig.1 rein schematisch dargestellte Auswertungseinheit 35 übermittelt werden. Diese kann mithilfe des Positionssignals ein Spursignal erzeugen, welches einer Fahrspurkorrektur der Rundballenpresse 1 entspricht. Das Spursignal kann eine einfache qualitative Information beinhalten, in welche Richtung die Fahrspur korrigiert werden muss, also nach links oder rechts. Die Auswertungseinheit 35 kann auch quantitativ einen Versatz der Fahrspur gegenüber einer idealen Fahrspur ermitteln und ein entsprechendes quantitatives Spursignal erzeugen. Ein quantitatives Spursignal könnte auch explizite Lenkanweisungen enthalten, zum Beispiel einen Lenkwinkel für eine bestimmte Zeit um einen bestimmten Betrag zu verändern. Unabhängig davon, ob qualitative oder quantitative Informationen enthalten sind, kann das Spursignal entweder genutzt werden, um einen Hinweis für einen Fahrer zu erzeugen oder um unmittelbar eine Lenkung anzusteuern. Bei der hier gezeigten gezogenen Rundballenpresse 1 kann das Spursignal an einen Schlepper übermittelt und dort weiter verarbeitet werden. Im Falle einer selbstfahrenden Rundballenpresse kann das Spursignal intern verwendet werden.

## Patentansprüche

1. Rundballenpresse (1) mit einem Rahmen (2) sowie einer Pressvorrichtung (10), durch welche eine Presskammer (30) zur Formung eines Erntegutballens (40) wenigstens teilweise definierbar ist, und die ein gegenüber dem Rahmen (2) umlaufend antreibbares, endloses Presselement (12) aufweist, welches über eine Mehrzahl von gegenüber dem Rahmen (2) drehbaren Rolleneinheiten (13, 16) geführt ist,
**dadurch gekennzeichnet, dass**
wenigstens eine Rolleneinheit (16) an einer Achseinheit (15) angeordnet und um eine Rollenachse (A) drehbar ist, wobei die Achseinheit (15) über ein Achseinheit-Schwenklager (19) mit einem rahmenseitigen Lagerabschnitt (5) verbunden ist, so dass sie zusammen mit der Rolleneinheit (16) um eine im Winkel zur Rollenachse (A) verlaufende Achseinheit-Schwenkachse (B) schwenkbar ist, wobei sich die Rolleneinheit (16) bezüglich der Rollenachse (A) beiderseits des Achseinheit-Schwenklagers (19) erstreckt.

2. Rundballenpresse nach Anspruch 1, **dadurch gekennzeichnet, dass** die Rolleneinheit (16) um die Rollenachse (A) drehbar an der Achseinheit (15) gelagert ist.

3. Rundballenpresse nach einem der vorangehenden Ansprüche, **dadurch gekennzeichnet, dass** die Achseinheit-Schwenkachse (B) senkrecht zur Rollenachse (A) verläuft.

4. Rundballenpresse nach einem der vorangehenden Ansprüche, **dadurch gekennzeichnet, dass** das Presselement (12) ein einzelner, in Richtung der Rollenachse (A) durchgehend ausgebildeter Pressriemen ist.

5. Rundballenpresse nach einem der vorangehenden Ansprüche, **dadurch gekennzeichnet, dass** die Rolleneinheit (16) zwei Teilrollen (17, 18) aufweist, die bezüglich der Rollenachse (A) auf gegenüberliegenden Seiten des Achseinheit-Schwenklagers (19) angeordnet sind.

6. Rundballenpresse nach einem der vorangehenden Ansprüche, **dadurch gekennzeichnet, dass** der Lagerabschnitt (5) wenigstens während der Formung des Erntegutballens (40) bezüglich des Rahmens (2) positionsfest ist.

7. Rundballenpresse nach einem der vorangehenden Ansprüche, **dadurch gekennzeichnet, dass** das Achseinheit-Schwenklager (19) zwei Freiheitsgrade aufweist und die Achseinheit-Schwenkachse (B) durch wenigstens ein bezüglich des Lagerabschnitts (5) positionsfestes erstes Führungselement (21) definiert ist, mit welchem ein an der Achseinheit (15) angeordnetes zweites Führungselement (22) eingreift.

8. Rundballenpresse nach einem der vorangehenden Ansprüche, **dadurch gekennzeichnet, dass** wenigstens ein Rückstellelement (26) wenigstens indirekt zwischen der Achseinheit (15) und dem Lagerabschnitt (5) zwischengeordnet und dazu eingerichtet ist, die Achseinheit (15) in Richtung auf eine Ruhelage zu beaufschlagen, in welcher die Rollenachse (A) parallel zur Querachse (Y) der Rundballenpresse (1) verläuft.

9. Rundballenpresse nach einem der vorangehenden Ansprüche, **dadurch gekennzeichnet, dass** wenigstens ein Rückstellelement (26) bezüglich der Rollenachse (A) außenseitig der Rolleneinheit (16) angeordnet ist.

10. Rundballenpresse nach einem der vorangehenden Ansprüche, **dadurch gekennzeichnet, dass** bezüglich der Rollenachse (A) beiderseits außenseitig der Rolleneinheit (16) jeweils wenigstens ein Rückstellelement (26) angeordnet ist.

11. Rundballenpresse nach einem der vorangehenden Ansprüche, **dadurch gekennzeichnet, dass** wenigstens ein Rückstellelement (26) mit der Achseinheit (15) über einen Schwenkhebel (25) zusammenwirkt, der relativ zum Lagerabschnitt (5) schwenkbar ist.

12. Rundballenpresse nach einem der vorangehenden Ansprüche, **dadurch gekennzeichnet, dass** ein Positionssensor (27) dazu eingerichtet ist, ein Positionssignal zu erzeugen, das einer aktuellen Position der Achseinheit (15) bezüglich der Achseinheit-Schwenkachse (B) entspricht.

13. Rundballenpresse nach einem der vorangehenden Ansprüche, **dadurch gekennzeichnet, dass** der Positionssensor (27) an einen Schwenkhebel (25) gekoppelt ist.

14. Rundballenpresse nach einem der vorangehenden Ansprüche, **dadurch gekennzeichnet, dass** eine Auswertungseinheit (35) dazu eingerichtet ist, in Abhängigkeit vom Positionssignal ein Spursignal zu erzeugen, welches einer Fahrspurkorrektur der Rundballenpresse (1) entspricht.

15. Verfahren zum Betreiben einer Rundballenpresse (1) mit einem Rahmen (2) sowie einer Pressvorrichtung (10), durch welche eine Presskammer (30) zur Formung eines Erntegutballens (40) wenigstens teilweise definiert wird, und die ein endloses Presselement (12) aufweist, welches gegenüber dem Rahmen (2) umlaufend angetrieben wird und über eine Mehrzahl von gegenüber dem Rahmen (2) drehbaren Rolleneinheiten (13, 16) geführt ist,
**dadurch gekennzeichnet, dass**
wenigstens eine Rolleneinheit (16) an einer Achseinheit (15) angeordnet ist und sich um eine Rollenachse (A) dreht, wobei die Achseinheit (15) über ein Achseinheit-Schwenklager (19) mit einem rahmenseitigen Lagerabschnitt (5) verbunden ist, so dass sie zusammen mit der Rolleneinheit (16) um eine im Winkel zur Rollenachse (A) verlaufende Achseinheit-Schwenkachse (B) schwenkt, wobei sich die Rolleneinheit (16) bezüglich der Rollenachse (A) beiderseits des Achseinheit-Schwenklagers (19) erstreckt, wobei ein Positionssensor (27) ein Positionssignal erzeugt, das einer aktuellen Position der Achseinheit (15) bezüglich der Achseinheit-Schwenkachse (B) entspricht, und eine Auswertungseinheit (35) in Abhängigkeit vom Positionssignal ein Spursignal erzeugt, welches einer Fahrspurkorrektur der Rundballenpresse (1) entspricht.
